# EUROPEAN PATENT APPLICATION

(11) **EP 4 303 680 A1**
(43) Date of publication of application: **10.01.2024**
(21) Application number: 23166778.3
(22) Date of filing: 05.04.2023
(51) Int. Cl.: G05B 23/02, G06N 20/00

(54) **A METHOD AND A CONTROL SYSTEM FOR DYNAMIC PROVISIONING OF VISUAL CONTENTS USING MACHINE LEARNING**

(30) Priority: 08.07.2022 IN 202241039424
(71) Applicant: ABB Schweiz AG, 5400 Baden (CH)
(72) Inventor: BICIK, Josef, 15500 Praha (CZ); VERMA, Utkarsh, 560035 Bangalore (IN); M, Anurag, 560037 Bangalore (IN)
(74) Representative: Zimmermann & Partner Patentanwälte mbB

(57) **Abstract**

The present disclosure relates to method and control system (102) for providing visual contents to user (104) for monitoring processes in an industrial system. The method comprises receiving plurality of variables associated with processes (101) in industrial system. Further, the method comprises determining presence of one or more critical variables based on one or more parameters, using machine learning model. Furthermore, the method comprises identifying one or more first visual contents by associating the one or more critical variables with plurality of visual contents. Each of the plurality of visual contents represents one or more processes from the plurality of processes (101) and corresponding variables. Moreover, the method comprises identifying one or more second visual contents based on availability of behaviour data of user (104), using the machine learning model. Thereafter, the method comprises providing the one or more first visual contents and the one or more second visual contents to the user (104).

## Description

### TECHNICAL FIELD

The present disclosure generally relates to control systems in industries. More particularly, the present disclosure relates to a method and a control system for dynamic provisioning of visual contents to a user using machine learning.

### BACKGROUND

Control systems are used in industrial systems to monitor processes for any abnormality in the processes. The control systems gather data from sensors located in the industrial systems and processes the data to provide visual content (e.g., a graphic of an industrial process) to users. The visual content provides visualization of the processes in real-time. The visualization aids in monitoring the processes in the industrial systems. Such control systems for example, include, Supervisory Control and Data Acquisition (SCADA), Distributed Control System (DCS), and the like. In a large industrial automation system, the control system continuously monitors a large set of complex processes for identifying any abnormality in the processes. Due to heavy load in the processing, interface of the control system, for example, Human Machine Interface (HMI), takes significant amount of time to provide the visual content. The amount of time taken by the interface is termed as call up time in the present description. It is crucial that the visual contents requested by the user are provided to the user without any delay. Also, when there are multiple visual contents, the user has to analyse select and analyse various visual contents for monitoring the processes. The visual contents in which a certain user is interested in or is the most critical one needs to be provided within a short call up time. Hence, the call up time needs to be decreased for the control system to provide enhanced user experience.

The information disclosed in this background of the disclosure section is only for enhancement of understanding of the general background of the invention and should not be taken as an acknowledgement or any form of suggestion that this information forms the prior art already known to a person skilled in the art.

### SUMMARY

In an embodiment, the present disclosure discloses a method of providing visual contents to a user for monitoring processes in an industrial system. The method comprises receiving a plurality of variables associated with a plurality of processes in an industrial system, from one or more sources. Further, the method comprises determining a presence of one or more critical variables from the plurality of variables based on one or more parameters, using a machine learning model. Furthermore, the method comprises identifying one or more first visual contents from a plurality of visual contents associated with the plurality of variables by associating the one or more critical variables with the plurality of visual contents, upon determination. Each of the plurality of visual contents represents one or more processes from the plurality of processes and corresponding variables. Moreover, the method comprises identifying one or more second visual contents based on availability of behaviour data of a user, using the machine learning model. Thereafter, the method comprises providing the one or more first visual contents and the one or more second visual contents to the user, for monitoring at least one process of the plurality of processes in the industrial system.

In an embodiment, the present disclosure discloses a control system for providing visual contents to a user for monitoring processes in an industrial system. The control system comprises one or more processors and a memory. The one or more processors are configured to receive a plurality of variables associated with a plurality of processes in an industrial system, from one or more sources. Further, the one or more processors are configured to determine a presence of one or more critical variables from the plurality of variables based on one or more parameters, using a machine learning model. Furthermore, the one or more processors are configured to identify one or more first visual contents from a plurality of visual contents associated with the plurality of variables by associating the one or more critical variables with the plurality of visual contents, upon determination. Each of the plurality of visual contents represents one or more processes from the plurality of processes and corresponding variables. Moreover, the one or more processors are configured to identify one or more second visual contents based on availability of behaviour data of a user, using the machine learning model. Thereafter, the one or more processors are configured to provide the one or more first visual contents and the one or more second visual contents to the user, for monitoring at least one process of the plurality of processes in the industrial system.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING DRAWINGS

The novel features and characteristics of the disclosure are set forth in the appended claims. The disclosure itself, however, as well as a preferred mode of use, further objectives, and advantages thereof, will best be understood by reference to the following detailed description of an illustrative embodiment when read in conjunction with the accompanying figures. One or more embodiments are now described, by way of example only, with reference to the accompanying figures wherein like reference numerals represent like elements and in which:
**Figure 1** illustrates an exemplary environment for providing visual contents to a user for monitoring processes in an industrial system, in accordance with some embodiments of the present disclosure;
**Figure 2** illustrates a detailed diagram of a control system for providing the visual contents to the user for monitoring processes in the industrial system, in accordance with some embodiments of the present disclosure;
**Figure 3** shows an exemplary illustration for providing the visual contents to the user for monitoring processes in the industrial system, in accordance with some embodiments of the present disclosure;
**Figure 4** shows an exemplary flow chart illustrating method steps for providing the visual contents to the user for monitoring processes in the industrial system, in accordance with some embodiments of the present disclosure; and
**Figure 5** shows a block diagram of a general-purpose computing system for providing the visual contents to the user for monitoring processes in the industrial system, in accordance with embodiments of the present disclosure.

It should be appreciated by those skilled in the art that any block diagram herein represents conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternatives falling within the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or apparatus.

Control systems are used in industrial systems to monitor processes for any abnormality in the processes and provide visual content to users. The users use the visual content for monitoring the processes in the industrial systems. Such control systems for example, include, Supervisory Control and Data Acquisition (SCADA), Distributed Control System (DCS), and the like. In a large industrial automation system, due to heavy load in the processing, interface of the control system takes significant amount of time to provide the visual content. The amount of time taken by the interface is referred as call up time. The call up time is required to be decreased for the control system to provide enhanced user experience.

The present disclosure provides a method and a control system for providing the visual contents to the user for monitoring the processes in the industrial system. The present disclosure determines critical variables from multiple variables of the processes in the industrial system based on certain parameters of the variables, using a machine learning model. The critical variables that need immediate attention of the users are determined. These critical variables are associated with visual contents in the control system to identify first visual contents from the visual contents. Hence, the first visual contents are identified based on the critical variables of the processes in the industrial system. Further, second visual contents is identified based on behaviour data of a user, using the machine learning model. The first visual contents and the second visual contents are provided to the user, for monitoring the processes in the industrial system. The present disclosure identifies a set of visual contents (the first visual contents and the second visual contents) from the multiple contents in the control system based on the critical variables and the behaviour data of the user. Hence, the visual contents are dynamically provisioned to the user based on the critical variables and the behaviour data of the user. The number of visual contents provided to the user is a reduced set of visual contents, which reduces the call up time of the control system. This enhances the user experience. Further, the reduced set of visual contents (i.e., the first visual contents and the second visual contents are stored in a cache of the control system to enable quick and easy access of the visual contents, based on a request from the user.. This further reduces the call up time of the control system. Also, since the reduced set of visual contents is stored in the cache, storage in the cache is optimized. Also, since the first visual contents are identified based on the critical variables that need immediate attention of the users, the monitoring of the processes is enhanced. Also, since the second visual contents are identified based on the behaviour data of the user, visual contents relevant to the user can be identified.

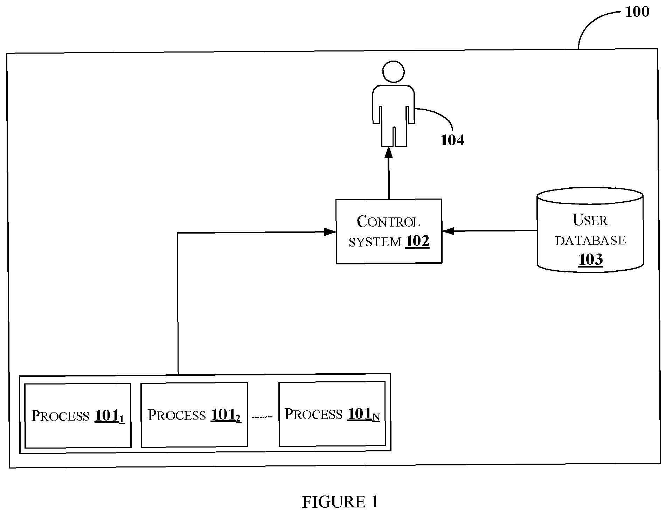

**Figure 1** illustrates an exemplary environment 100 for providing visual contents to a user for monitoring processes in an industrial system, in accordance with the embodiments of the present disclosure. The environment 100 comprises a plurality of processes 101₁, 101₂, ...., 101_{N} (collectively referred as the plurality of processes 101), a control system 102, a user database 103, and a user 104. The plurality of processes 101 of the industrial system may include for example, oil production process, cement manufacturing process, and the like. The control system 102 is used to monitor the plurality of processes 101 in the industrial system for identifying any abnormality in the plurality of processes 101. The control system 102 may gather data from one or more sensors located in the industrial system and processes the data to provide the visual content to the user 104. The visual content provides visualization of the plurality of processes 101 in real-time. The users may use the visual content for monitoring the plurality of processes 101 in the industrial systems. The control system 102 may include, for example, Supervisory Control and Data Acquisition (SCADA), Distributed Control System (DCS), and the like. The control system 102 may be associated with an interface for providing the visual content to the user 104. For example, the interface may include a Human Machine Interface (HMI). The control system 102 is used to provide the visual contents to the user 104. When the user 104 requests for the visual contents, the control system 102 receives variables associated with the plurality of processes 101 from one or more sources. The plurality of variables may comprise at least one of, electrical variables, mechanical variables, thermal variables, and the like. The one or more sources may include one or more sensors for sensing the electrical variables, the mechanical variables, the thermal variables, and the like. A person skilled in the art will appreciate that the plurality of variables may include any variables other than the above-mentioned variables and likewise the one or more sensors may include any sensors other than the above-mentioned sensors. For instance, the plurality of processes 101 may include a paper manufacturing process. The control system 102 may receive the plurality of variables such as, moisture level of a pulp, a speed of a roller, and the like. The one or more sources may include one or more sensors such as a moisture sensor, a speed sensor, and the like. The control system 102 determines whether one or more critical variables that may need immediate attention of the user 104 are present in the plurality of variables based on one or more parameters, using a machine learning model. For instance, the speed of the roller may be greater than an expected value. The speed may be considered as a critical variable. The control system 102 may identify first visual contents that include the one or more critical variables, from a plurality of visual contents generated by the control system. For instance, the first visual contents may include a graph of the speed of the roller. Further, the control system 102 identifies second visual contents, based on behaviour data of the user 104, using the machine learning model. The behaviour data that is learnt by the machine learning model is stored in the user database 103 and retrieved to identify the second visual contents. For instance, the second visual contents may include a graph of a pressure of the roller. Then, the control system 102 provides the first visual contents and the second visual contents to the user 104 for monitoring the plurality of processes 101 in the industrial system. Hence, the present disclosure enables dynamic provisioning of the visual contents based on the critical variables and the behaviour data of the user 104.

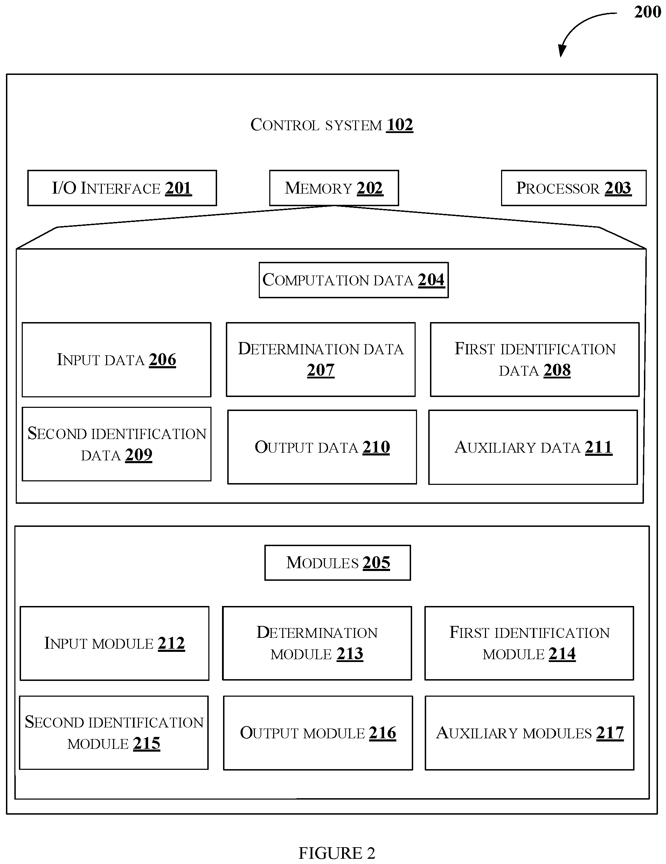

**Figure 2** illustrates a detailed diagram 200 of the control system 102 for providing the visual contents to the user 104 for monitoring the plurality of processes 101 in the industrial system, in accordance with some embodiments of the present disclosure. The control system 102 may include Central Processing Units 203 (also referred as "CPUs" or "one or more processors 203"), Input/ Output (I/O) interface 201, and a memory 202. In some embodiments, the memory 202 may be communicatively coupled to the one or more processors 203. The memory 202 stores instructions executable by the one or more processors 203. The one or more processors 203 may comprise at least one data processor for executing program components for executing user or system-generated requests. The memory 202 may be communicatively coupled to the one or more processors 203. The memory 202 stores instructions, executable by the one or more processors 203, which, on execution, may cause the one or more processors 203 to provide the visual contents to the user 104 for monitoring the plurality of processes 101 in the industrial system. In an embodiment, the memory 202 may include one or more modules 205 and computation data 204. The one or more modules 205 may be configured to perform the steps of the present disclosure using the computation data 204, to provide the visual contents to the user 104 for monitoring the plurality of processes 101 in the industrial system. In an embodiment, each of the one or more modules 205 may be a hardware unit which may be outside the memory 202 and coupled with the control system 102. As used herein, the term modules 205 refers to an Application Specific Integrated Circuit (ASIC), an electronic circuit, a Field-Programmable Gate Arrays (FPGA), Programmable System-on-Chip (PSoC), a combinational logic circuit, and/or other suitable components that provide described functionality. The one or more modules 205 when configured with the described functionality defined in the present disclosure will result in a novel hardware. Further, the I/O interface 201 is coupled with the one or more processors 203 through which an input signal or/and an output signal is communicated. For example, the control system 102 may receive the plurality of variables from the one or more sources using the I/O interface 201. In an embodiment, the control system 102 may be implemented in a variety of computing systems, such as a laptop computer, a desktop computer, a Personal Computer (PC), a notebook, a smartphone, a tablet, e-book readers, a server, a network server, a cloud-based server, and the like.

In one implementation, the modules 205 may include, for example, an input module 212, a determination module 213, a first identification module 214, a second identification module 215, an output module 216, and auxiliary modules 217. It will be appreciated that such aforementioned modules 205 may be represented as a single module or a combination of different modules. In one implementation, the computation data 204 may include, for example, input data 206, determination data 207, first identification data 208, second identification data, output data 210, and auxiliary data 211.

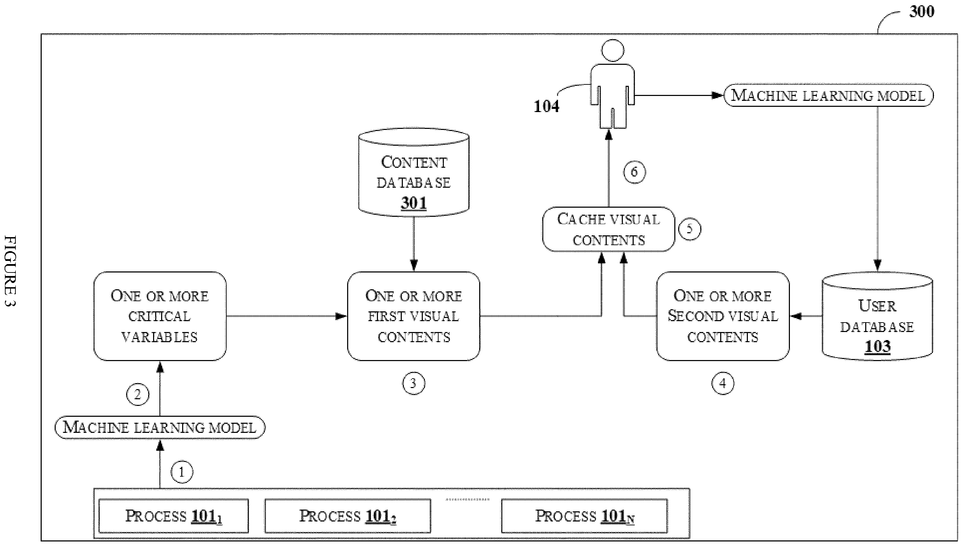

In an embodiment, the input module 212 may be configured to receive the plurality of variables associated with the plurality of processes 101 in the industrial system. The plurality of variables may comprise at least one of, electrical variables, mechanical variables, and thermal variables. A person skilled in the art will appreciate that the plurality of variables may include any variables other than the above-mentioned variables. **Figure 3** shows an exemplary illustration of providing the visual contents to the user 104 for monitoring the plurality of processes 101 in the industrial system, in accordance with embodiments of the present disclosure. In a first example, the plurality of processes 101 may include multiple processes of a cement manufacturing process. A process from the multiple processes may be associated with a conveyor system comprising multiple components such as, a motor, a motor drive controller, and the like. The plurality of variables may include current, torque, load, speed, control variables of the motor drive controller, and the like. In a second example, the plurality of processes 101 may include multiple processes of an oil production process. The plurality of variables may comprise a flow rate of an oil, a temperature of the oil, and the like. At step 1, the input module 212 may receive the plurality of variables from the one or more sources comprising one or more sensors in the industrial system. For example, the one or more sensors may include a current sensor, a speed sensor, a moisture sensor, a pressure sensor, a temperature sensor, a flow rate sensor, and the like. The plurality of variables associated with the plurality of processes 101 may be stored as the input data 206 in the memory 202.

Referring back to Figure 2, in an embodiment, the determination module 213 may be configured to receive the input data 206 from the input module 212. Further, the determination module 213 may be configured to determine a presence of one or more critical variables from the plurality of variables based on one or more parameters, using the machine learning model. The one or more parameters may comprise at least one of, alarm severity level associated with the plurality of variables and threshold values associated with a rate of change of the plurality of variables. The alarm severity level associated with the plurality of variables may indicate a level of severity of an alarm generated for the plurality of variables. For example, the alarm level severity may indicate low severity level, medium severity level, and high severity level. In a large industrial system, there may be a large number of variables generating an alarm. Hence, the present disclosure considers the alarm severity level for determining the one or more critical variables such that variables which require immediate attention of the user 104 are identified. The threshold values associated with the rate of change of the plurality of variables may indicate higher rate of change or lower rate of change. The plurality of variables may include values that are high or low than the threshold or expected values. The threshold values may be pre-determined or learnt by the machine learning model. The machine learning model may determine the one or more critical variables based on a pre-defined alarm severity level or the alarm severity level learnt by the machine learning model over a period of time. In an embodiment, the machine learning model may be a decision tree technique. A person skilled in the art will appreciate that any machine learning technique other than the above-mentioned technique may be used to determine the one or more critical variables.

Referring again to the example shown in Figure 3, at step 2, the one or more critical variables are identified using the machine learning model. Referring to the first example, the rate of change of the speed of the motor may be less than expected. The determination module 213 may determine the speed as a critical variable. Referring to the second example, the flow rate of the oil at a particular point in an oil pipeline may be higher than the threshold value. The determination module 213 may determine the flow rate as a critical variable. Referring to the first example, there may be a slight peak in a value of the current at a first time instance and the value may return to expected value at a second time instance. The machine learning learns that the slight peak in the value of the current had no immediate effect on operation of the motor, based on feedback received from a user in past. Hence, when there is the slight peak in the value of the current, the machine learning model determines that the slight peak does not require immediate attention. Thus, the determination module 213 may determine that the current is associated with a low severity level. Referring to the second example, the flow rate may be high for a continuous period of time. The machine learning model may determine that the flow rate requires immediate attention of the user 104 based on the pre-determined severity level. Thus, the determination module 213 may determine that the flowrate is associated with a high severity level. In another example, the determination module 213 may determine an absence of the one or more critical variables when there are no variables that are associated with high severity level or values that are high or low than the threshold values. The one or more critical variables may be stored as the determination data 207 in the memory 202.

Referring back to Figure 2, in an embodiment, the first identification module 214 may be configured to receive the determination data 207 from the determination module 213. Further, the first identification module 214 may be configured to identify one or more first visual contents from a plurality of visual contents associated with the plurality of variables. Each of the plurality of visual contents represents one or more processes from the plurality of processes 101 and corresponding variables. For example, a visual content may represent a graph of the speed of the motor versus time. The plurality of visual contents may be generated by the control system 102. The first identification module 214 may identify the one or more first visual contents by associating the one or more critical variables with the plurality of visual contents. That is, the first identification module 214 may identify the one or more first visual contents representing the one or more critical variables. Referring again to the example shown in Figure 3, the one or more first visual contents are identified at step 3. Referring to the first example, the plurality of visual contents may be fetched from a content database 301 and may include graphs of the speed, the current, the torque of the motor, and the like. The first identification module 214 may identify the graph of the speed of the motor as a first visual content since the speed of the motor is determined as a critical variable. Referring to the second example, the plurality of visual contents may include graphics of pipelines, equipment connected to pipelines, graphs of the flow rate, a pressure of the oil, and the like. The first identification module 214 may identify the graph of the flow rate as a first visual content since the flow rate is determined as a critical variable. Further, the first identification module 214 may identify the graphic of a pipeline in which the flow rate is high (which may indicate a leakage) as a first visual content. The one or more first visual contents may be stored as the first identification data 208 in the memory 202.

Referring back to Figure 2, in an embodiment, the second identification module 215 may be configured to receive the first identification data 208 from the first identification module 214. Further, the second identification module 215 may be configured to identify the one or more second visual contents based on availability of behaviour data of the user 104, using the machine learning model. The machine learning model may be a predictive learning model. For instance, the machine learning model may be a random forest model. A person skilled in the art may appreciate that the machine learning model may include any model other than the above-mentioned model for identifying the one or more second visual contents. The user 104 requesting the visual contents may be a new user or a user that accessed the visual contents at least once prior to the request. When the user has accessed the visual contents at least once prior to the request, the behaviour data of the user 104 that is learnt by the machine learning model is available in the user database 103. The behaviour data may comprise at least one of, historic visual content selected by the user 104, a selection pattern associated with the historic visual content, identification details of the user 104 and a role of the user 104 in the industrial system. A person skilled in the art will appreciate that the behaviour data may comprise any data other than the above-mentioned data. The historic visual content may comprise the visual content selected by the user 104 in the past. The selection pattern associated with the historic visual content may comprise a timestamp associated with the selection, a day of the week when the visual content is selected, a work shift of the user, and the like. The identification details of the user 104 may comprise profile details such as, name of the user, work details of the user, and the like. Referring again to the example of Figure 3, the one or more second visual contents may be identified using the machine learning model, based on the availability of the behaviour data in the user database 103 at step 4. Referring to the first example, a first user associated with the cement manufacturing process may be in a hardware domain. The graphs of various variables of the motor may be selected by the first user in the past. In such case, the second identification module 215 may identify the second visual contents as the graph of the speed of the motor and the torque of the motor for the first user. A second user associated with the cement manufacturing process may be in a software domain. The second user may check control parameters of the motor drive controller every Monday at 10 AM and Friday 4PM. The second identification module 215 may identify the second visual contents as the graphs of the control parameters of the motor drive controller for the second user. Referring to the second example, consider a new user associated with the oil production process may request the visual contents. In such case, the second identification module 215 may determine the unavailability of the behaviour data. Referring back to Figure 2, the second identification module 215 may update the behaviour data based on a learning by the machine learning model when the user 104 selects one or more visual contents other than the one or more first visual contents and the one or more second visual contents. The one or more second visual contents may be stored as the second identification data 215 in the memory 202.

Referring back to Figure 2, in an embodiment, the output module 216 may be configured to receive the first identification data 208 from the first identification module 214 and the second identification data 215 from the second identification module 215. The one or more first visual contents and the second visual contents may be stored in a cache of the control system 102. The output module 216 may retrieve the one or more first visual contents and the second visual contents from the cache upon receiving a request from the user 104. The output module 216 may provide the one or more first visual contents and the second visual contents on the interface associated with the control system 102. A number of the one or more first visual contents and the one or more second visual contents provided to the user 104 is less than a pre-defined threshold value based on a size limit of the interface. For instance, the output module 216 may provide the one or more second visual contents to the user 104 based on the behaviour data, upon determining an absence of the one or more critical variables by the first identification module 214. While the output module 216 may provide the one or more first visual contents to the user 104 based on the association of the one or more critical variables with the plurality of visual contents, upon determining unavailability of the behaviour data by the second identification module 215. Referring again to the example of Figure 3, at step 5, the one or more first visual contents and the second visual contents are cached. At step 6, a number of the one or more first visual contents and the second visual contents is determined. The number of the one or more first visual contents and the one or more second visual contents provided to the user 104 is limited to a pre-defined threshold value based on a size limit of the interface. For instance, consider the number of the one or more first visual contents is two and the number of the one or more second visual contents is four. Consider the value of the pre-defined threshold value is ten. Since the number of the one or more first visual contents and the one or more second visual contents i.e., six is less than ten, six visual contents are provided to the user 104. In another example, consider the number of the one or more first visual contents is five and the one or more second visual contents is six. The number of the one or more first visual contents and the one or more second visual contents is eleven which is greater than 10. In such case, a maximum number of each of the one or more first visual contents and the one or more second visual contents may be provided to the user. In the above example, the number of the one or more first visual contents and the one or more second visual contents may be five each, Since the number of one or more second visual contents is six, one visual content from the one or more second visual contents may be eliminated. Then, the one or more first visual contents and the second visual contents are provided to the user 104. The one or more first visual contents and the second visual contents provided to the user 104 may be stored as the output data 210 in the memory 202.

The auxiliary data 211 may store data, including temporary data and temporary files, generated by the one or more modules 205 for performing the various functions of the control system 102. The one or more modules 205 may also include the auxiliary modules 217 to perform various miscellaneous functionalities of the control system 102. The auxiliary data 211 may be stored in the memory 202. It will be appreciated that the one or more modules 205 may be represented as a single module or a combination of different modules.

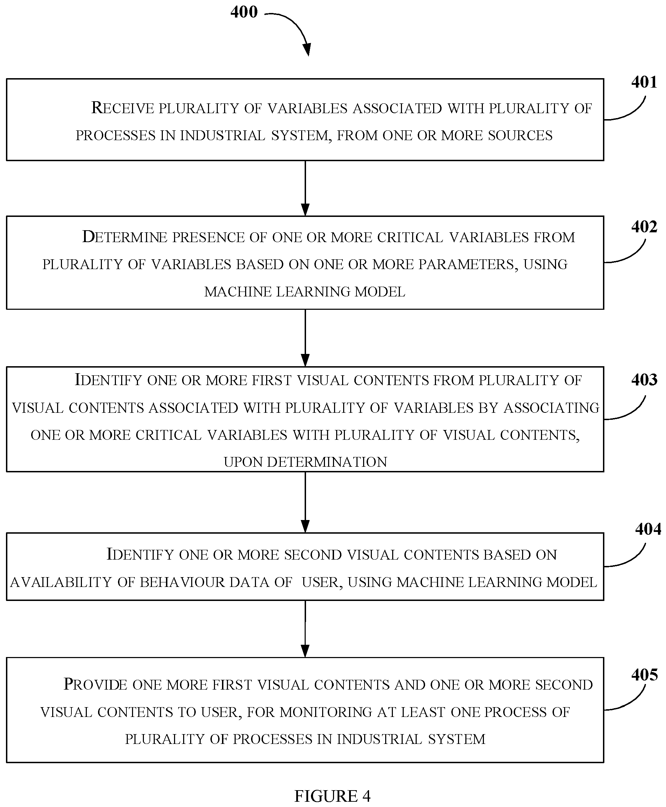

**Figure** 4 shows an exemplary flow chart illustrating method steps for providing the visual contents to the user 104 for monitoring the plurality of processes 101 in the industrial system, in accordance with some embodiments of the present disclosure. As illustrated in Figure 4, the method 400 may comprise one or more steps. The method 400 may be described in the general context of computer executable instructions. Generally, computer executable instructions can include routines, programs, objects, components, data structures, procedures, modules, and functions, which perform particular functions or implement particular abstract data types.

The order in which the method 400 is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At step 401, the control system 102 receives the plurality of variables associated with the plurality of processes 101 in the industrial system. The plurality of variables may comprise at least one of, electrical variables, mechanical variables, and thermal variables. The control system 102 may receive the plurality of variables from the one or more sources comprising one or more sensors in the industrial system.

At step 402, the control system 102 determines a presence of the one or more critical variables from the plurality of variables based on one or more parameters, using the machine learning model. The one or more parameters may comprise at least one of, alarm severity level associated with the plurality of variables and threshold values associated with a rate of change of the plurality of variables. The alarm severity level associated with the plurality of variables may indicate a level of severity of an alarm generated for the plurality of variables. The threshold values associated with the rate of change of the plurality of variables may indicate higher rate of change or lower rate of change. The threshold values may be pre-determined or learnt by the machine learning model. The machine learning model may determine the one or more critical variables based on a pre-defined alarm severity level or threshold level.

At step 403, the control system 102 identifies the one or more first visual contents from the plurality of visual contents associated with the plurality of variables. Each of the plurality of visual contents represents the one or more processes from the plurality of processes 101 and corresponding variables. The plurality of visual contents may be generated by the control system 102. The control system 102 may identify the one or more first visual contents by associating the one or more critical variables with the plurality of visual contents.

At step 404, the control system 102 identifies the one or more second visual contents based on availability of the behaviour data of the user 104, using the machine learning model. The behaviour data may comprise at least one of, historic visual content selected by the user 104, a selection pattern associated with the historic visual content, identification details of the user 104 and a role of the user 104 in the industrial system. The behaviour data may be updated based on a learning by the machine learning model when the user 104 selects one or more visual contents other than the one or more first visual contents and the one or more second visual contents.

At step 405, the control system 102 provides the one or more first visual contents and the second visual contents from the cache upon receiving a request from the user 104. The number of the one or more first visual contents and the one or more second visual contents provided to the user 104 is less than a pre-defined threshold value based on a size limit of the interface. The control system 102 may provide the one or more second visual contents to the user 104 based on the behaviour data, upon determining an absence of the one or more critical variables. The control system 102 may provide the one or more first visual contents to the user 104 based on the association of the one or more critical variables with the plurality of visual contents, upon determining unavailability of the behaviour data.

### COMPUTER SYSTEM

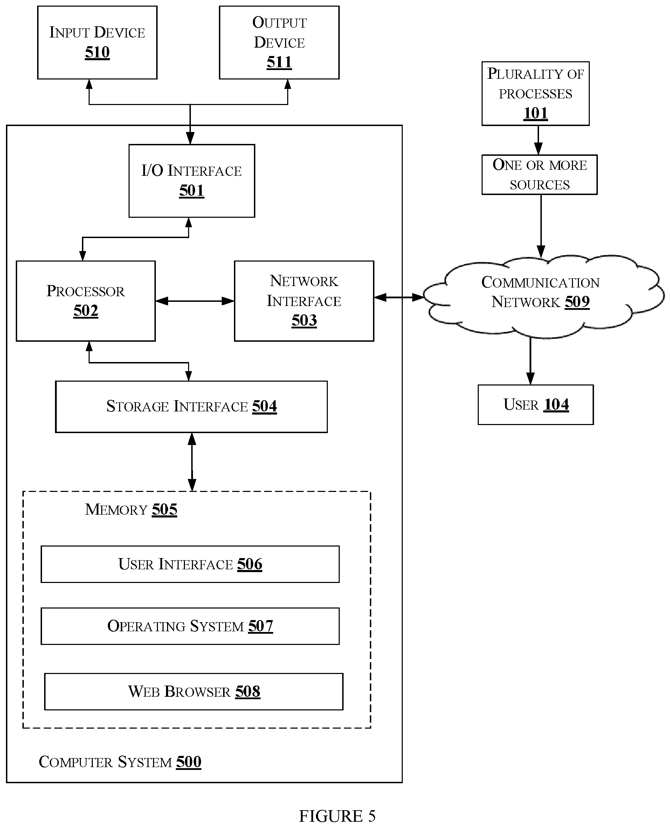

**Figure 5** illustrates a block diagram of an exemplary computer system 500 for implementing embodiments consistent with the present disclosure. In an embodiment, the computer system 500 may be the control system 102. Thus, the computer system 500 may be used to manage the visual contents to the user 104 for monitoring the plurality of processes 101 in the industrial system. The computer system 500 may receive the plurality of variables associated with the plurality of processes 101 from the one or more sources over a communication network 509. Further, the computer system 500 may provide the one or more first visual contents and the second visual contents to the user 104 over the communication network 509. The computer system 500 may comprise a Central Processing Unit 502 (also referred as "CPU" or "processor"). The processor 502 may comprise at least one data processor. The processor 502 may include specialized processing units such as integrated system (bus) controllers, memory management control units, floating point units, graphics processing units, digital signal processing units, etc.

The processor 502 may be disposed in communication with one or more input/output (I/O) devices (not shown) via I/O interface 501. The I/O interface 501 may employ communication protocols/methods such as, without limitation, audio, analog, digital, monoaural, RCA, stereo, IEEE (Institute of Electrical and Electronics Engineers) -1394, serial bus, universal serial bus (USB), infrared, PS/2, BNC, coaxial, component, composite, digital visual interface (DVI), high-definition multimedia interface (HDMI), Radio Frequency (RF) antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 501, the computer system 500 may communicate with one or more I/O devices. For example, the input device 510 may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output device 511 may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

The processor 502 may be disposed in communication with the communication network 509 via a network interface 503. The network interface 503 may communicate with the communication network 509. The network interface 503 may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 509 may include, without limitation, a direct interconnection, local area network (LAN), wide area network (WAN), wireless network (e.g., using Wireless Application Protocol), the Internet, etc. The network interface 503 may employ connection protocols include, but not limited to, direct connect, Ethernet (e.g., twisted pair 10/100/1000 Base T), transmission control protocol/internet protocol (TCP/IP), token ring, IEEE 802.11a/b/g/n/x, etc.

The communication network 509 includes, but is not limited to, a direct interconnection, an e-commerce network, a peer to peer (P2P) network, local area network (LAN), wide area network (WAN), wireless network (e.g., using Wireless Application Protocol), the Internet, Wi-Fi, and such. The first network and the second network may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the first network and the second network may include a variety of network devices, including routers, bridges, servers, computing devices, storage devices, etc.

In some embodiments, the processor 502 may be disposed in communication with a memory 505 (e.g., RAM, ROM, etc. not shown in Figure 5) via a storage interface 504. The storage interface 504 may connect to memory 505 including, without limitation, memory drives, removable disc drives, etc., employing connection protocols such as serial advanced technology attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory 505 may store a collection of program or database components, including, without limitation, user interface 506, an operating system 507, web browser 508 etc. In some embodiments, computer system 500 may store user/application data, such as, the data, variables, records, etc., as described in this disclosure. Such databases may be implemented as fault-tolerant, relational, scalable, secure databases such as Oracle ^{®} or Sybase^{®}.

The operating system 507 may facilitate resource management and operation of the computer system 500. Examples of operating systems include, without limitation, APPLE MACINTOSH^{R} OS X, UNIX^{R}, UNIX-like system distributions (E.G., BERKELEY SOFTWARE DISTRIBUTION^{™} (BSD), FREEBSD^{™}, NETBSD^{™}, OPENBSD^{™}, etc.), LINUX DISTRIBUTIONS^{™} (E.G., RED HAT^{™}, UBUNTU^{™}, KUBUNTU^{™}, etc.), IBM^{™} OS/2, MICROSOFT^{™} WINDOWS^{™} (XP^{™}, VISTA^{™}/7/8, 10 etc.), APPLE^{R} IOS^{™}, GOOGLE^{R} ANDROID^{™}, BLACKBERRY^{R} OS, or the like.

In some embodiments, the computer system 500 may implement the web browser 508 stored program component. The web browser 508 may be a hypertext viewing application, for example MICROSOFT^{R} INTERNET EXPLORER^{™}, MICROSOFT^{R} EDGE^{R}, GOOGLE^{R} CHROME^{TM0}, MOZILLA^{R} FIREFOX^{™}, APPLE^{R} SAFARI^{™}, etc. Secure web browsing may be provided using Secure Hypertext Transport Protocol (HTTPS), Secure Sockets Layer (SSL), Transport Layer Security (TLS), etc. Web browsers 508 may utilize facilities such as AJAX^{™}, DHTML^{™}, ADOBE^{R} FLASH^{™}, JAVASCRIPT^{™}, TYPESCRIPT^{™} JAVA^{™}, Application Programming Interfaces (APIs), etc. In some embodiments, the computer system 500 may implement a mail server (not shown in Figure) stored program component. The mail server may be an Internet mail server such as Microsoft Exchange, or the like. The mail server may utilize facilities such as ASP^{™}, ACTIVEX^{™}, ANSI^{™} C++/C#, MICROSOFT^{R},.NET^{™}, CGI SCRIPTS^{™}, JAVA^{™}, JAVASCRIPTTM, PERL^{™}, PHPTM, PYTHONTM, WEBOBJECTS^{™}, web assemblies, etc. The mail server may utilize communication protocols such as Internet Message Access Protocol (IMAP), Messaging Application Programming Interface (MAPI), MICROSOFT^{R} exchange, Post Office Protocol (POP), Simple Mail Transfer Protocol (SMTP), web socket, or the like. The mail server may utilize communication technology such as, but not limited to, push technology. In some embodiments, the computer system 500 may implement a mail client stored program component. The mail client (not shown in Figure) may be a mail viewing application, such as APPLE^{R} MAIL^{™}, MICROSOFT^{R} ENTOURAGE^{™}, MICROSOFT^{R} OUTLOOK^{™}, MOZILLA^{R} THUNDERBIRD^{™}, etc.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include Random Access Memory (RAM), Read-Only Memory (ROM), volatile memory, non-volatile memory, hard drives, Compact Disc Read-Only Memory (CD ROMs), Digital Video Disc (DVDs), flash drives, disks, and any other known physical storage media.

The present disclosure provides a method and a control system for providing the visual contents to the user for monitoring the processes in the industrial system. The present disclosure determines critical variables from multiple variables of the processes in the industrial system based on certain parameters of the variables, using a machine learning model. The critical variables that need immediate attention of the users are determined. These critical variables are associated with visual contents in the control system to identify first visual contents from the visual contents. Hence, the first visual contents are identified based on the critical variables of the processes in the industrial system. Further, second visual contents is identified based on behaviour data of a user, using the machine learning model. The first visual contents and the second visual contents are provided to the user, for monitoring the processes in the industrial system. The present disclosure identifies a set of visual contents (the first visual contents and the second visual contents) from the multiple contents in the control system based on the critical variables and the behaviour data of the user. Hence, the visual contents are dynamically provisioned to the user based on the critical variables and the behaviour data of the user. The number of visual contents provided to the user is a reduced set of visual contents, which reduces the call up time of the control system. This enhances the user experience. Further, the first visual contents and the second visual contents are stored in a cache of the control system and retrieved upon receiving a request for the visual contents from the user, thus providing quick and easy access to the visual contents. This further reduces the call up time of the control system. Also, since the first visual contents are identified based on the critical variables that need immediate attention of the users, the monitoring of the processes is enhanced. Also, since the second visual contents are identified based on the behaviour data of the user, the user experience if further enhanced. Also, since the second visual contents are identified based on the behaviour data of the user, visual contents relevant to the user can be identified.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise. The terms "a", "an" and "the" mean "one or more", unless expressly specified otherwise.

A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article, or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of Figure 4 shows certain events occurring in a certain order. In alternative embodiments, certain operations may be performed in a different order, modified, or removed. Moreover, steps may be added to the above described logic and still conform to the described embodiments. Further, operations described herein may occur sequentially or certain operations may be processed in parallel. Yet further, operations may be performed by a single processing unit or by distributed processing units.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

**Referral Numerals:**

| **Referral Number** | **Description** |
|---|---|
| 100 | Environment |
| 101 | Plurality of processes |
| 102 | Control system |
| 103 | User database |
| 104 | User |
| 200 | Detailed diagram |
| 201 | I/O interface |
| 202 | Memory |
| 203 | Processor |
| 204 | Computation data |
| 205 | Modules |
| 206 | Input data |
| 207 | Determination data |
| 208 | First identification data |
| 209 | Second identification data |
| 210 | Output data |
| 211 | Auxiliary data |
| 212 | Input module |
| 213 | Determination module |
| 214 | First identification module |
| 215 | Second identification module |
| 216 | Output module |
| 217 | Auxiliary modules |
| 301 | Content database |
| 500 | Computer system |
| 501 | I/O interface |
| 502 | Processor |
| 503 | Network interface |
| 504 | Storage interface |
| 505 | Memory |
| 506 | User interface |
| 507 | Operating system |
| 508 | Web browser |
| 509 | Communication network |
| 510 | Input device |
| 511 | Output device |

## Claims

1. A method of providing visual contents to a user (104) for monitoring processes in an industrial system, the method comprises:
receiving a plurality of variables associated with a plurality of processes (101) in an industrial system, from one or more sources;
determining a presence of one or more critical variables from the plurality of variables based on one or more parameters, using a machine learning model;
identifying one or more first visual contents from a plurality of visual contents associated with the plurality of variables by associating the one or more critical variables with the plurality of visual contents, upon determination, wherein each of the plurality of visual contents represents one or more processes from the plurality of processes (101) and corresponding variables;
identifying one or more second visual contents based on availability of behaviour data of a user (104), using the machine learning model; and
providing the one or more first visual contents and the one or more second visual contents to the user (104), for monitoring at least one process of the plurality of processes (101) in the industrial system.

2. The method as claimed in claim 1, wherein upon determining an absence of the one or more critical variables, comprising:
providing the one or more second visual contents to the user (104), based on the behaviour data.

3. The method as claimed in claim 1 or 2, wherein upon determining unavailability of the behaviour data, comprising:
providing the one or more first visual contents to the user (104), based on the association of the one or more critical variables with the plurality of visual contents.

4. The method as claimed in one of the preceding claims, wherein the plurality of variables comprises at least one of, electrical variables, mechanical variables, and thermal variables.

5. The method as claimed in one of the preceding claims, wherein the one or more sources comprise one or more sensors in the industrial system.

6. The method as claimed in one of the preceding claims, wherein the one or more parameters comprise at least one of, alarm severity level associated with the plurality of variables and threshold values associated with a rate of change of the plurality of variables.

7. The method as claimed in one of the preceding claims, wherein the behaviour data comprises at least one of, historic visual content selected by the user (104), a selection pattern associated with the historic visual content, identification details of the user (104) and a role of the user (104) in the industrial system.

8. The method as claimed in one of the preceding claims, further comprising:
storing the one or more first visual contents and the second visual contents in a cache, wherein the one or more first visual contents and the second visual contents are retrieved from the cache upon receiving a request from the user (104).

9. The method as claimed in one of the preceding claims, wherein the number of the one or more first visual contents and the one or more second visual contents provided to the user (104) is less than a pre-defined threshold value.

10. The method as claimed in one of the preceding claims, wherein identifying the one or more second visual contents further comprises:
updating the behaviour data based on a learning by the machine learning model when the user (104) selects one or more visual contents other than the one or more first visual contents and the one or more second visual contents.

11. A control system (102) for providing visual content to a user (104) for monitoring processes in an industrial system, the control system (102) comprising:
a memory (202); and
one or more processors (203) coupled to the memory (202), wherein the memory (202) stores processor-executable instructions, which, on execution, cause the one or more processors (203) to:
receive a plurality of variables associated with a plurality of processes (101) in an industrial system, from one or more sources;
determine a presence of one or more critical variables from the plurality of variables based on one or more parameters, using a machine learning model;
identify one or more first visual contents from a plurality of visual contents associated with the plurality of variables by associating the one or more critical variables with the plurality of visual contents, upon determination, wherein each of the plurality of visual contents represents one or more processes from the plurality of processes (101) and corresponding variables;
identify one or more second visual contents based on availability of behaviour data of a user (104), using the machine learning model; and
provide the one or more first visual contents and the one or more second visual contents to the user (104), for monitoring at least one process of the plurality of processes (101) in the industrial system.

12. The control system (102) as claimed in claim 11, wherein upon determining an absence of the one or more critical variables, the one or more processors (203) are configured to:
provide the one or more second visual contents to the user (104), based on the behaviour data; and/or
wherein upon determining unavailability of the behaviour data, the one or more processors (203) are configured to:
provide the one or more first visual contents to the user (104), based on the association of the one or more critical variables with the plurality of visual contents.

13. The control system (102) as claimed in claim 11 or 12, wherein the plurality of variables comprises at least one of, electrical variables, mechanical variables, and thermal variables and wherein the one or more sources comprise one or more sensors in the industrial system; and/or wherein the one or more parameters comprise at least one of, alarm severity level associated with the plurality of variables and threshold values associated with a rate of change of the plurality of variables; and/or
wherein the behaviour data comprises at least one of, historic visual content selected by the user (104), a selection pattern associated with the historic visual content, identification details of the user (104) and a role of the user (104) in the industrial system.

14. The control system (102) as claimed in one of the claims 11 - 13, wherein the one or more processors (203) are further configured to:
store the one or more first visual contents and the second visual contents in a cache, wherein the one or more first visual contents and the second visual contents are retrieved from the cache upon receiving a request from the user (104).

15. The control system (102) as claimed in one of the claims 11 - 14, wherein the number of the one or more first visual contents and the one or more second visual contents provided to the user (104) is less than a pre-defined threshold value; and/or
wherein identifying the one or more second visual contents further comprises:
updating the behaviour data based on a learning by the machine learning model when the user (104) selects one or more visual contents other than the one or more first visual contents and the one or more second visual contents.
